# EUROPÄISCHE PATENTANMELDUNG

(11) **EP 2 249 291 A1**
(43) Veröffentlichungstag der Anmeldung: **10.11.2010**
(21) Anmeldenummer: 10004812.3
(22) Anmeldetag: 06.05.2010
(51) Int. Cl.: G06K 19/07, G06F 21/00, H04W 12/02, H04L 29/06

(54) **Verfahren zur Erhöhung der Sicherheit einer bestehenden kontaktlosen Chipkartentechnik**

(30) Priorität: 07.05.2009 DE 102009020342
(71) Anmelder: Masktech GmbH, 87435 Kempten (DE)
(72) Erfinder: Dünßer, Matthias, 87490 Börwang (DE)
(74) Vertreter: Prinz & Partner

(57) **Zusammenfassung**

Ein Verfahren zur Erhöhung der Sicherheit einer bestehenden kontaktlosen Chipkartentechnik mit einem proprietären Kommunikationsprotokoll, umfasst das Bereitstellen von Chipkarten, die jeweils einen Mikroprozessor-Chip mit einem Sicherheitsbetriebssystem aufweisen, das auf einer besseren Verschlüsselungstechnik als diejenige der bestehenden kontaktlosen Chipkartentechnik basiert. Das Verfahren umfasst ferner das Modifizieren der Steuerung eines Schreib-/Lesegeräts der bestehenden kontaktlosen Chipkartentechnik so, dass das proprietäre Kommunikationsprotokoll als Transportschicht genutzt wird und die Kommunikation zwischen dem Schreib-/Lesegerät und der Chipkarte unter Verwendung der besseren Verschlüsselungstechnik durchgeführt wird. Ein kontaktloses Chipkartensystem basiert auf einer bestehenden Chipkartentechnik mit einem proprietären Kommunikationsprotokoll. Die Sicherheit der Chipkartentechnik des Systems wird durch das o.g. Verfahren erhöht.

## Beschreibung

Die Erfindung betrifft ein Verfahren zur Erhöhung der Sicherheit einer bestehenden kontaktlosen Chipkartentechnik. Die Erfindung betrifft ferner ein kontaktloses Chipkartensystem basierend auf einer bestehenden Chipkartentechnik.

Systeme mit stationären Lesegeräten zum kontaktlosen Auslesen und ggf. Beschreiben von Chipkarten finden u. a. Verwendung bei Zugangskontrollen, beim elektronischen Ticketing, als bargeldloses Bezahlungsmittel sowie beim Datenaustausch mittels NFC (Near Field Communication), insbesondere mit Mobiltelefonen. Es sind verschiedene kontaktlose Chipkartentechniken bekannt, die den Standards ISO/IEC 7816 bzw. ISO/IEC 14443 Type A entsprechen.

Die weltweit meistgenutzte kontaktlose Chipkartentechnik ist unter dem Namen Mifare bekannt. Die verwendeten Chipkarten kommen ohne eigene Stromversorgung aus. Der Chip einer Karte wird durch das elektromagnetische Feld des Schreib-/Lesegeräts und die im Chip vorhandene Drahtspule beim Durchführen durch das elektromagnetische Feld mit Energie versorgt und kann dann mit dem Schreib-/Lesegerät kommunizieren. Der Speicher der Chipkarten ist in Sektoren unterteilt, die durch einen Zugriffsschlüssel vor unerlaubtem Lesen bzw. Schreiben geschützt sind. Für die Authentifizierung und die Verschlüsselung wird ein proprietäres Kommunikationsprotokoll verwendet.

Die Verschlüsselung des oft eingesetzten Mifare-Classic-Chips basiert auf einem proprietären Algorithmus namens Crypto1. Dieser Algorithmus konnte jedoch inzwischen durch reverse engineering aufgedeckt werden. Außerdem ist es inzwischen möglich, aus manipulierten Leseversuchen mit Hilfe einer vorberechneten Tabelle den Zugriffsschlüssel einer Mifare-Classic-Chipkarte in kurzer Zeit abzuleiten.

Um diese Sicherheitslücken zu schließen, wurde bereits ein Upgrade unter dem Namen Mifare Plus entwickelt, das eine bessere 128-bit-AES-Verschlüsselung unterstützt. Das Datenmanagement ist identisch zur Mifare-Classic-Technik, das verbesserte Sicherheitsmanagement setzt jedoch eine Hardware-Modifikation der Schreib-/Lesegeräte voraus. In einer Umgebung mit nicht-umgerüsteten Classic-Schreib-/Lesegeräten, fällt die Mifare-Plus-Technik dagegen wieder auf den unsicheren Crypto1-Algorithmus zurück.

Aufgabe der Erfindung ist es, die Sicherheit einer bestehenden kontaktlosen Chipkartentechnik mit möglichst geringem Aufwand zu erhöhen.

Gelöst wird diese Aufgabe durch ein Verfahren mit den Merkmalen des Anspruchs 1. Das erfindungsgemäße Verfahren zur Erhöhung der Sicherheit einer bestehenden kontaktlosen Chipkartentechnik mit einem proprietären Kommunikationsprotokoll umfasst folgende Schritte:
- Bereitstellen von Chipkarten, die jeweils einen Mikroprozessor-Chip mit einem Sicherheitsbetriebssystem aufweisen, das auf einer besseren Verschlüsselungstechnik als diejenige der bestehenden kontaktlosen Chipkartentechnik basiert;
- Modifizieren der Steuerung eines Schreib-/Lesegeräts der bestehenden kontaktlosen Chipkartentechnik so, dass
   a) das proprietäre Kommunikationsprotokoll als Transportschicht genutzt wird; und
   b) die Kommunikation zwischen dem Schreib-/Lesegerät und der Chipkarte unter Verwendung der besseren Verschlüsselungstechnik durchgeführt wird.

Anstelle des Sicherheitsbetriebssystems kann auch eine festverdrahtete anwendungsspezifische integrierte Schaltung vorgesehen sein, die die bessere Verschlüsselungstechnik aufweist.

Die Erfindung hat den Vorteil, dass zur Erhöhung der Sicherheit die bestehende Infrastruktur weitestgehend unverändert weiter genutzt werden kann. Vorzugsweise erfolgt das Modifizieren ausschließlich durch Umprogrammieren der Steuerung eines Schreib-/Lesegeräts, sodass keine Hardware-Änderungen an den bestehenden Schreib-/Lesegeräten erforderlich sind.

Gegenstand der Erfindung ist auch ein kontaktloses Chipkartensystem mit den Merkmalen des Anspruchs 6. Das erfindungsgemäße kontaktlose Chipkartensystem basiert auf einer bestehenden Chipkartentechnik mit einem proprietären Kommunikationsprotokoll, dessen Sicherheit mit einem Verfahren nach einem der vorhergehenden Ansprüche erhöht wurde, wobei das System umfasst:
- Chipkarten, die jeweils einen Mikroprozessor-Chip mit einem Sicherheitsbetriebssystem aufweisen, das auf einer besseren Verschlüsselungstechnik als diejenige der bestehenden kontaktlosen Chipkartentechnik basiert;
- Schreib-/Lesegeräte der bestehenden kontaktlosen Chipkartentechnik, deren Steuerung so modifiziert ist, dass
   a) das proprietäre Kommunikationsprotokoll als Transportschicht genutzt wird; und
   b) die Kommunikation zwischen dem Schreib-/Lesegerät und der Chipkarte unter Verwendung der besseren Verschlüsselungstechnik durchgeführt wird.

Vorteilhafte und zweckmäßige Ausgestaltungen des erfindungsgemäßen Verfahrens bzw. des erfindungsgemäßen Systems sind in den Unteransprüchen angegeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine schematische Darstellung einer bestehenden kontaktlosen Chipkartentechnik; und
- Figur 2 eine schematische Darstellung der Chipkartentechnik mit erfindungsgemäß erhöhter Sicherheit.

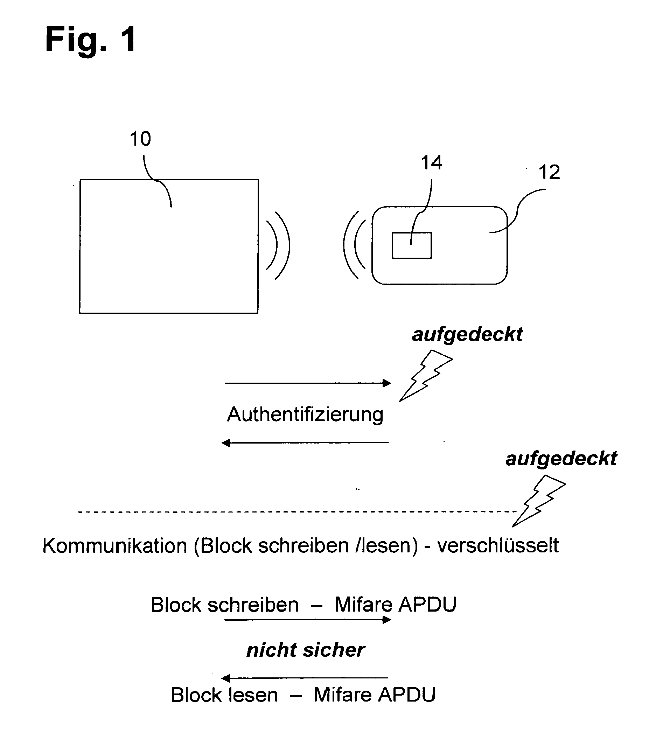

In Figur 1 ist eine bestehende kontaktlose Chipkartentechnik am Beispiel einer Mifare-Classic-Infrastruktur dargestellt. Ein stationäres Schreib-/Lesegerät 10 kann mit einer Chipkarte 12 kommunizieren, die mit einem Mifare-Classic-Speicherchip 14 ausgestattet ist. Die Chipkartentechnik entspricht den Standards ISO/IEC 7816 bzw. ISO/IEC 14443 Type A, wobei jedoch für die Kommunikation, insbesondere für die Authentifizierung der Chipkarte 12, kein Standardprotokoll verwendet wird, sondern ein proprietäres Kommunikationsprotokoll (Mifare-Protokoll). Auch die nach erfolgreicher Authentifizierung stattfindenden Schreib-/Lesevorgänge sind verschlüsselt.

Die Sicherheit einer solchen Chipkartentechnik hängt von der Qualität und der Geheimhaltung der Verschlüsselungstechnik (Algorithmus und Schlüssel) ab.

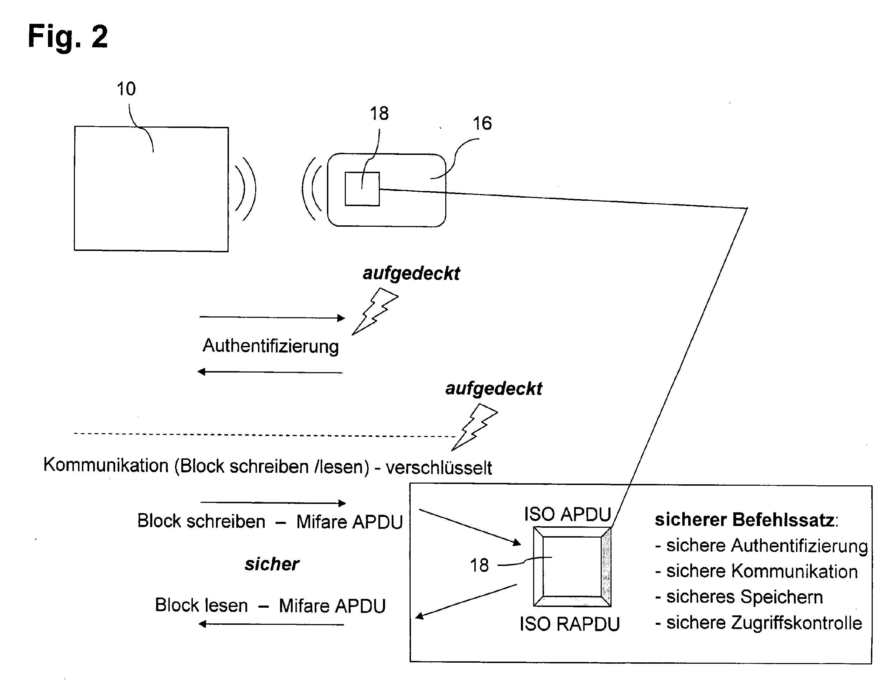

Figur 2 zeigt eine kontaktlose Chipkartentechnik, die auf der zuvor beschriebenen Technik aufbaut, jedoch eine erhöhte Sicherheit hinsichtlich der Kommunikation und der auf einer Chipkarte 16 gespeicherten Daten aufweist. Die Chipkarte 16 trägt anstelle eines Speicherchips einen Mikroprozessor-Chip 18 mit einem leistungsfähigen Sicherheitsbetriebssystem. Das Betriebssystem des Chips 18 basiert auf einer hochwertigen Verschlüsselungstechnik, die insbesondere der Mifare-Verschlüsselungstechnik überlegen ist.

Die Steuerung des vorhandenen Schreib-/Lesegeräts 10 wurde durch reine Software-Modifikation, d. h. ohne Veränderungen an der Hardware, auf den Mikroprozessor-Chip 18 der Chipkarte 16 und dessen Betriebssystem abgestimmt. Eine solche Modifikation ist im Normalfall durch Austausch der Betriebssoftware (Firmware) des Schreib-/Lesegeräts 10 möglich. (Ggf. kann alternativ oder zusätzlich ein Austausch von Steuerkomponenten (Hardware) vorgenommen werden.) Die dadurch erreichte Funktionalität wird nachfolgend im Detail erläutert.

Das proprietäre Kommunikationsprotokoll der bestehenden Chipkartentechnik wird weiterhin genutzt, jedoch nur noch als Transportschicht. Der Mikroprozessor-Chip 18 enthält eine Anwendung, die den Mifare-Speicherchip emuliert. In Verbindung mit der modifizierten Steuerung des Schreib-/Lesegeräts 10 werden Informationen aber in einem Kommunikationsspeicher des Mikroprozessor-Chips 18 zwischengespeichert (gepuffert). Das Betriebssystem des Mikroprozessor-Chips 18 liest den Pufferspeicher aus und verarbeitet die Informationen unter Verwendung der hochwertigen Verschlüsselungstechnik. Verarbeitete Daten werden ggf. nach Mifare-Technik in einem dafür vorgesehenen Speicherbereich des Mikroprozessor-Chips 18 abgelegt.

Der Befehlssatz des Sicherheitsbetriebssystems umfasst sichere Authentifizierung, sichere Kommunikation sowie sicheres Speichern und sichere Zugriffskontrolle auf gespeicherte Daten.

Die mit dem besonderen Mikroprozessor-Chip 18 ausgestatteten Chipkarten 16 können grundsätzlich auch mit nicht-umprogrammierten Schreib-/Lesegeräten 10 verwendet werden. Allerdings weist in diesem Fall die Kommunikation zwischen dem Schreib-/Lesegerät 10 und der Chipkarte 16 im Vergleich zur bestehenden kontaktlosen Chipkartentechnik keine erhöhte Sicherheit auf.

## Patentansprüche

1. Verfahren zur Erhöhung der Sicherheit einer bestehenden kontaktlosen Chipkartentechnik mit einem proprietären Kommunikationsprotokoll, umfassend folgende Schritte:
- Bereitstellen von Chipkarten, die jeweils einen Mikroprozessor-Chip mit einem Sicherheitsbetriebssystem aufweisen, das auf einer besseren Verschlüsselungstechnik als diejenige der bestehenden kontaktlosen Chipkartentechnik basiert;
- Modifizieren der Steuerung eines Schreib-/Lesegeräts der bestehenden kontaktlosen Chipkartentechnik so, dass
a) das proprietäre Kommunikationsprotokoll als Transportschicht genutzt wird; und
b) die Kommunikation zwischen dem Schreib-/Lesegerät und der Chipkarte unter Verwendung der besseren Verschlüsselungstechnik durchgeführt wird.

2. Verfahren nach Anspruch 1, **dadurch gekennzeichnet, dass** der Schritt des Modifizierens ausschließlich oder wenigstens teilweise durch Umprogrammieren der Steuerung eines Schreib-/Lesegeräts erfolgt.

3. Verfahren nach Anspruch 1 oder 2, **dadurch gekennzeichnet, dass** Schreib- und/oder Lesevorgänge auf der Chipkarte vom Sicherheitsbetriebssystem durchgeführt oder zumindest unterstützt werden.

4. Verfahren nach einem der vorhergehenden Ansprüche, **dadurch gekennzeichnet, dass** vom Schreib-/Lesegerät auf die Chipkarte übertragene Informationen in einem Kommunikationsspeicher des Mikroprozessor-Chips zwischengespeichert und vom Sicherheitsbetriebssystem ausgelesen und verarbeitet werden.

5. Verfahren nach einem der vorhergehenden Ansprüche, **dadurch gekennzeichnet, dass** anstelle des Sicherheitsbetriebssystems eine festverdrahtete anwendungsspezifische integrierte Schaltung vorgesehen ist, die die bessere Verschlüsselungstechnik aufweist.

6. Kontaktloses Chipkartensystem, basierend auf einer bestehenden Chipkartentechnik mit einem proprietären Kommunikationsprotokoll, dessen Sicherheit mit einem Verfahren nach einem der vorhergehenden Ansprüche erhöht wurde, wobei das System umfasst:
- Chipkarten (16), die jeweils einen Mikroprozessor-Chip (18) mit einem Sicherheitsbetriebssystem aufweisen, das auf einer besseren Verschlüsselungstechnik als diejenige der bestehenden kontaktlosen Chipkartentechnik basiert;
- Schreib-/Lesegeräte (10) der bestehenden kontaktlosen Chipkartentechnik, deren Steuerung so modifiziert ist, dass
a) das proprietäre Kommunikationsprotokoll als Transportschicht genutzt wird; und
b) die Kommunikation zwischen dem Schreib-/Lesegerät (10) und der Chipkarte (16) unter Verwendung der besseren Verschlüsselungstechnik durchgeführt wird.

7. Kontaktloses Chipkartensystem nach Anspruch 6, **dadurch gekennzeichnet, dass** die Steuerung eines Schreib-/Lesegeräts (10) umprogrammiert ist.

8. Kontaktloses Chipkartensystem nach Anspruch 6 oder 7, **dadurch gekennzeichnet, dass** der Mikroprozessor-Chip (18) mit dem Sicherheitsbetriebssystem so ausgelegt ist, dass Schreib- und/oder Lesevorgänge auf der Chipkarte (16) vom Sicherheitsbetriebssystem durchgeführt oder zumindest unterstützt werden.

9. Kontaktloses Chipkartensystem nach einem der Ansprüche, 6 bis 8 **dadurch gekennzeichnet, dass** der Mikroprozessor-Chip (18) einen Kommunikationsspeicher aufweist, in dem vom Schreib-/Lesegerät (10) auf die Chipkarte (16) übertragene Informationen zwischengespeichert werden, die vom Sicherheitsbetriebssystem ausgelesen und verarbeitet werden.

10. Kontaktloses Chipkartensystem nach einem der Ansprüche 6 bis 9, **dadurch gekennzeichnet, dass** anstelle des Sicherheitsbetriebssystems eine festverdrahtete anwendungsspezifische integrierte Schaltung vorgesehen ist, die die bessere Verschlüsselungstechnik aufweist.
